Europäisches Patentamt

(19) European Patent Office

Office européen des brevets

(11) Publication number: **0 287 134 B1**

(12) **EUROPEAN PATENT SPECIFICATION**

(45) Date of publication of patent specification :
**18.09.91 Bulletin 91/38**

(51) Int. Cl.⁵ : **G01G 19/30, G01G 19/38**

(21) Application number : **88200243.9**

(22) Date of filing : **10.02.88**

(54) **Weighing and mixing device.**

(30) Priority : **10.02.87 NL 8700316**

(43) Date of publication of application :
**19.10.88 Bulletin 88/42**

(45) Publication of the grant of the patent :
**18.09.91 Bulletin 91/38**

(84) Designated Contracting States :
**BE DE ES FR GB IT LU NL SE**

(56) References cited :
**GB-A- 1 237 105**
**NL-A- 7 607 309**
**US-A- 4 222 448**
**Kochsiek, " Handbuch des Wägens", Vieweg, Braunschweig (DE), 1985, pages 423-425**

(73) Proprietor : **AERTS ELECTRO B.V.**
**Groesweg 22**
**NL-5993 NN Maasbree (NL)**

(72) Inventor : **Aerts, Hubertus Marie**
**Groesweg 18**
**NL-5993 NN Maasbree (NL)**

(74) Representative : **Hoijtink, Reinoud et al**
**OCTROOIBUREAU ARNOLD & SIEDSMA**
**Sweelinckplein 1**
**NL-2517 GK Den Haag (NL)**

EP 0 287 134 B1

## Description

The current invention relates to an apparatus for measuring off by weight and mixing together different materials, comprising : a container being equipped for mixing the content thereof ; feed members for supplying the materials ; at least one weighing member for weighing the content of said container ; and a control member for controlling said feed members subject to the weight content of said container.

Such an apparatus is known from the book "Handbuch des Wägens", Editor Manfred Kochsiek, Publisher Friedrich Vieweg & Sohn 1985, Braunschweig/Wiesbaden, in particular pages 423-425 thereof.

In this known apparatus a separate mixer has been provided to mix the components present in the container.

The aim of the present invention is to provide such an apparatus, wherein there is no need for a separate mixer.

This aim is reached in that the container is open at the top, that said container can be rotated on its vertical axis, and that said container can be driven for this rotation by a motor.

These features allow a separate mixer to dispense with, nevertheless insuring a good mixing action.

The invention will be further elucidated hereinafter with reference to the annexed drawings, in which:

> fig. 1 shows a partly broken away perspective view of one particular embodiment of the current invention ; and
> fig. 2 shows a partly broken away perspective view of a second embodiment of the current invention.

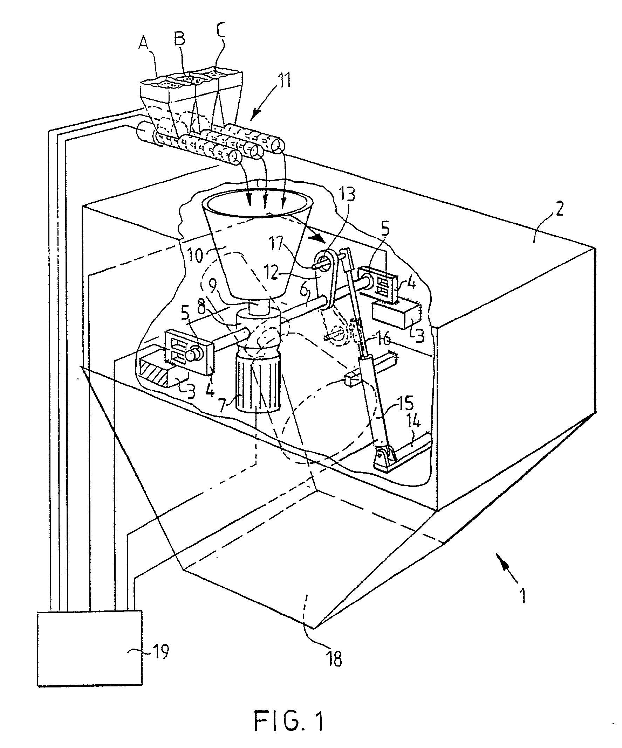

The weighing and mixing apparatus 1 according to the current invention shown in fig. 1 is provided with a housing 2 in which two blocks 3 are arranged against two sides located facing each other. Attached onto each of these blocks 3 are two weight recorders 4 provided with bearings 5. Fitted between bearings 5 is a shaft 6 so that this shaft 6 is free rotating inside the bearings 5, but whereby the vertical forces exerted on shaft 6 are transmitted to the weight recorders 4.

Firmly attached to shaft 6 is a wheel gear box 8 to which is attached a motor 7. By means of wheel gear box 8 and a shaft 9 attached thereto the motor 7 drives a mixing container 10 attached to shaft 9. Above mixing container 10 the upper part of housing 2 is provided with an opening (not shown in the drawing). Three dosing screws 11 attached above housing 2 discharge above this opening.

The shaft 6 and with it the container 10 is rotatable on the central mathematical axis of shaft 6. Shaft 6 is provided for driving in this rotation with an arm 12 in which is arranged a round opening 13. Arranged in housing 2 by means of a projection 14 is a pneumatic cylinder 15. Cylinder 15 is provided with a piston rod 16, on the end of which is fitted a rod 17 extending at right angles to piston rod 16. This rod 17 extends through the opening 13 of arm 12. The housing 2 is provided on the underside with an opening 18 for discharge of the weighed and mixed bulk material.

The dosing screws 11, motor 7 and hydraulic cylinder 15 are connected to and operated by a control device 19 to which the signals coming from the weight recorders 4 are also fed. The control device will generally take the form of a digital computer device provided with interfaces.

The weighing and mixing apparatus 1 described here is employed for the weighing and mixing of cattle feed that is composed of three separate components, e.g. three different types of meal. Each of the components is supplied via one of the dosing screws 11. Stored in the program of the control device 19 incorporating the digital computer device is the quantity of each of the components that has to be fed in.

Component A of the cattle feed for mixing is supplied first by means of dosing screw 11. The quantity of the cattle feed component A present in mixing container 10 is measured by the weight recorders 4 and passed on to control device 19. When almost the required amount of component A is located in the mixing container, the speed of the dosing screw is reduced so that the supply speed of component A is likewise reduced. As a result it is possible to dose very accurately. When the required amount of component A is has been arrived at, dosing screw 11 is stopped so that no more of component A is supplied.

Component B is then supplied according to program so that screw 11B is started and component B is added to the quantity of component A already in mixing container 10. When the required weight has been reached the control device takes into account the amount of component A already present in the mixing container. Also in this case the speed of dosing screw 11B is reduced when the required quantity has almost been reached and stopped when the actual required quantity has been arrived at.

This procedure is repeated for the component C supplied by means of dosing screw 11C.

A quantity of cattle feed of correct composition is now located in the mixing container. This cattle feed composed of the components A, B and C is subsequently mixed by driving of the mixing drum 10 by means of motor 7, wheel gear box 8 and shaft 9. This driving is also controlled by control device 19. In order to improve the mixing action the container may be provided with ribs or blades (not shown in the drawing) or a stirring rod arranged in fixed position may extend into the mixing drum.

When the mixing time written into the program of control device 19 is completed, the whole assembly consisting of shaft 6, arm 12, motor 7 wheel gear box 8, shaft 9 and mixing drum 10 is rotated by means of the pneumatic cylinder 15, piston rod 16, rod 17, hole 13 and arm 12 so that the content of mixing drum 10 leaves the weighing and mixing apparatus through the opening 18 of the housing.

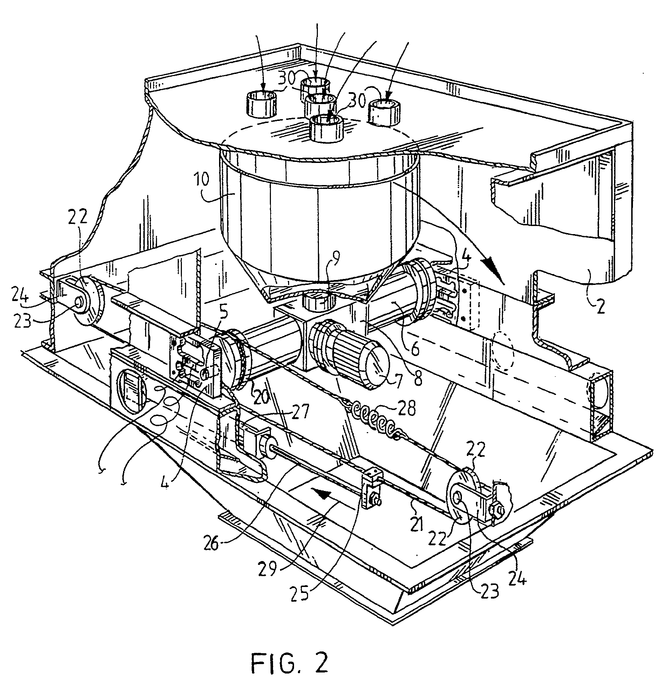

The embodiment of the current invention shown in fig. 2 corresponds substantially with the embodiment described with reference to fig. 1. The construction of the housing 2 and the weight recorders 4 differs insofar that weight recorders 4 are accommodated in the housing 2 so that separate blocks 3 are no longer necessary. Weight recorders 4 are each provided with an opening through which extends a shaft end part 5. Attached to each of the shaft end parts 5 are bearings 20, between which the shaft 6 extends so that it can rotate in bearings 20.

A further difference is the driving device for tilting of the mixing container 10 ; the rotatable part of bearing 20 that is connected rigidly to shaft 6 is provided with a groove, around which is passed a cable 21. On the upper part of the rotatable part of bearing 20 the cable 21 extends horizontally on either side and is guided on both sides over pulleys 22 which are attached by means of a shaft 23 and a holder 24 to the walls of housing 2. Further connected to the cable by means of a clamp 25 is the piston rod 26 of a pneumatic cylinder 27. The latter is fixed rigidly to housing 2.

As a result of actuation, pneumatic cylinder 27 is withdrawn and the piston rod 26 of pneumatic cylinder 27 is pulled inward, which results in the lower half of cable 21 being moved by means of clamp 25 in the direction indicated by arrow 29. The shaft 6 will as a result move in clockwise direction. When piston rod 26 is pushed outwards the shaft will rotate in anticlockwise direction so that the mixing drum is moved back again to its starting position.

This driving device has the advantage that no forces acting in vertical direction are exerted on shaft 6 so that the measuring of the weight of the whole assembly consisting of shaft 6, wheel gear box 8, motor 7, shaft 9, mixing drum 10 and the content thereof is not influenced by any moments that may be exerted on the shaft by the tilt driving device. This is achieved by directing the driving forces such that they only act in horizontal direction and do not comprise any vertical component.

In the embodiment from fig. 1 any forces that may be acting in horizontal directions are avoided because the motor 7 is so heavy that shaft 9 always extends in the vertical direction. Only when the apparatus is tilted, because the hydraulic cylinder 15 is moved, the pin 17 exerts a force on the arm 17. Pin 17 stands otherwise entirely free of this arm.

The apparatus as in fig. 2 is otherwise used in the same way as the apparatus from fig. 1.

In general this weighing and mixing apparatus 1 will be placed above a belt conveyor or above another transporting member, with which the mixed cattle feed is delivered to the required place, which in this case will be the feed trough of a particular animal. An attractive idea would of course be for this conveyor device also to be controlled by the control device 19 so that the whole feeding process can be performed automatically, whereby each animal is supplied with the correct amount of feed of the correct composition.

In addition it is possible, taking the embodiment shown in fig. 1 as starting point, to dispense with the tilting device consisting of hydraulic cylinder 15 and associated elements, and to lengthen the shaft 6 on one side. An electromotor is then placed in a line with the shaft 6, which motor can be coupled to this shaft by means of a mechanical coupling. The motor is of course only coupled to the shaft when the container is tilted so that the weighing is not otherwise influenced.

The above embodiments are formed with three dosing screws 11. An apparatus according to the invention may of course be equipped with any random number of dosing screws.

The embodiments described relate to the mixing of cattle feed. The apparatus according to the invention can of course also be employed in the mixing of other bulk products, for example raw materials for a bakery such as flour, yeast and so on. The invention is therefore not limited to the weighing and mixing of dry material ; pasta-like products or even liquids can also be supplied. In this latter case the dosing screw is of course replaced by a regulator tap.

## Claims

1. Apparatus (1) for measuring off by weight and mixing together different materials, comprising :
   — a container (10) being equipped for mixing the content thereof ;
   — feed members (11) for supplying the materials;
   — at least one weighing member (4) for weighing the content of said container (10) ; and
   — a control member (19) for controlling said feed members (11) subject to the weight content of said container (10), **characterized in** that the container (10) is open at the top, said container (10) can be rotated on its vertical axis and that said container can be driven for this rotation by a motor (7).

2. Apparatus as claimed in claim 1, **characterized in** that the control member (19) is arranged such that the speed of supply of the material decreases as the pre-determined weight quantity is approached.

3. Apparatus as claimed in claim 1 or 2, **characterized in** that the container (10) can tilt on a horizontal shaft (6).

4. Apparatus as claimed in claim 3, **characterized in** that the horizontal shaft (6) is placed beneath the container (10).

5. Apparatus as claimed in claim 3 or 4, **characterized in** at least one of the bearings (5) of the horizontal shaft (6) forms part of a weight recorder (4).

6. Apparatus as claimed in claim 3, 4 or 5, **characterized in** that the container (10) can be driven for tilting by means of an endless cable (21) passed round a drum (20) arranged on the horizontal shaft (6), extending from said drum (20) to both sides in horizontal direction and guided round two pulleys (22) arranged on either side of said horizontal shaft (6), which cable (21) is drivable by means of a linear displacing member (27).

7. Apparatus as claimed in claim 6, **characterized in** that the linear displacing member is a pneumatically driven cylinder (27).

8. Apparatus as claimed in claim 3, 4 or 5, **characterized in** that the horizontal shaft (6) can be coupled by means of a coupling to an electromotor for driving the tilting of the container.

9. Apparatus as claimed in any of the preceeding claims, **characterized in** that the feed members are formed by dosing screws (11) of regulable speed.

10. Apparatus as claimed in any of the preceeding claims, **characterized in** that the container (10) is placed inside a cabinet (2).

11. Apparatus (1) as claimed in any of the preceeding claims, **characterized in** that it forms part of a cattle feed device.

12. Apparatus as claimed in any of the preceeding claims, **characterised in** that the control member (19) is formed by a programmed digital computer device.

## Patentansprüche

1. Vorrichtung (1) zum gewichtsmäßigen Abmessen und Vermischen unterschiedlicher Materialien, mit
— einem Behälter (10) der zum Mischen seines Inhalts ausgestattet ist ;
— Zuführelementen (11) zum Zuführen der Materialien ;
— wenigstens einem Waageelement (4) zum Wiegen des Inhalts des Behälters ; und
— einem Steuerelement (19) zum Steuern der Zuführelemente (11) in Abhängigkeit vom Gewicht des Inhalts des Behälters (10), dadurch gekennzeichnet, daß der Behälter (10) oben offen ist, um seine vertikale Achse drehbar ist und für die Drehbewegung von einem Motor (7) angetrieben werden kann.

2. Vorrichtung nach Anspruch 1, dadurch gekennzeichnet, daß das Steuerelement (19) derart angeordnet ist, daß sich die Zuführgeschwindigkeit des Materiales verlangsamt, bevor das Gewicht der vorbestimmten Menge erreicht wird.

3. Vorrichtung nach Anspruch 1 oder 2, dadurch gekennzeichnet, daß der Behälter (10) auf einer horizontalen Welle (6) kippen kann.

4. Vorrichtung nach Anspruch 3, dadurch gekennzeichnet, daß sich die horizontale Welle (6) unter dem Behälter (10) befindet.

5. Vorrichtung nach Anspruch 3 oder 4, dadurch gekennzeichnet, daß wenigstens eines der Lager (5) der horizontalen Welle (6) einen Teil eines Gewichtaufzeichnungsgerätes (4) bildet.

6. Vorrichtung nach Anspruch 3, 4 oder 5, dadurch gekennzeichnet, daß der Behälter (10) zum Kippen von einem Endloskabel antreibbar ist, welches um eine auf der horizontalen Welle (6) befindliche Trommel (20) geführt ist und sich von dieser Trommel (20) aus zu beiden Seiten in horizontaler Richtung erstreckt und um zwei Rollen (22) geführt ist, die sich beidseitig der horizontalen Welle befinden, wobei das Kabel (21) mittels eines Linearantriebes (27) antreibbar ist.

7. Vorrichtung nach Anspruch 6, dadurch gekennzeichnet, daß der Linearantrieb ein pneumatisch angetriebener Zylinder (27) ist.

8. Vorrichtung nach Anspruch 3, 4 oder 5, dadurch gekennzeichnet, daß die horizontale Welle (6) mittels einer Kupplung mit einem Elektromotor zum Antreiben des Kippens des Behälters gekuppelt werden kann.

9. Vorrichtung nach einem der vorangehenden Ansprüche, dadurch gekennzeichnet, daß die Zuführelemente als Dosierschnecken (11) mit regelbarer Geschwindigkeit ausgebildet sind.

10. Vorrichtung nach einem der vorangehenden Ansprüche, dadurch gekennzeichnet, daß sich der Behälter (10) in einem Kasten (2) befindet.

11. Vorrichtung nach einem der vorangehenden Ansprüche, dadurch gekennzeichnet, daß sie einen Teil einer Viehfüttervorrichtung bildet.

12. Vorrichtung nach einem der vorangehenden Ansprüche, dadurch gekennzeichnet, daß das Steuerungselement (19) von einer programmierten, digitalen Rechenvorrichtung gebildet wird.

## Revendications

1. Appareil (1) pour peser et mélanger différentes matières, comprenant un récipient (10) équipé pour mélanger les matières qu'il contient, des éléments d'alimentation (11) pour fournir les matières, au moins un élément de pesage pour peser le contenu dudit récipient, et un élément de commande (19) pour commander lesdits éléments d'alimentation (11) par rapport au poids du contenu dudit récipient (10), caractérisé en ce que le récipient (10) est ouvert sur le dessus, et peut être actionné en rotation selon son axe vertical, en ce que ledit récipient peut être entraîné en rotation par un moteur (7).

2. Appareil selon la revendication 1, caractérisé en ce que l'élément de commande (19) est conçu de manière à ce que le débit d'alimentation de la matière décroisse au fur et à mesure que l'on se rapproche de la quantité prédéterminée à fournir en terme de poids.

3. Appareil selon l'une des revendications 1 ou 2, caractérisé en ce que le récipient (10) peut basculer sur un arbre horizontal (6).

4. Appareil selon la revendication 3, caractérisé en ce que l'arbre horizontal (6) est placé en-dessous du récipient (10).

5. Appareil selon l'une des revendications 3 ou 4, caractérisé en ce qu'au moins un des paliers (5) de l'arbre horizontal (6) fait partie d'un enregistreur de poids (4).

6. Appareil selon l'une des revendications 3 à 5, caractérisé en ce que le récipient (10) peut être entraîné pour basculer grâce à un câble sans fin (21) placé autour d'un tambour (20) disposé sur l'arbre horizontal (6), ledit câble s'étendant des deux côtés du tambour (20) dans le sens horizontal et étant guidé autour de deux poulies (22) disposées de chaque côté dudit arbre horizontal (6), lequel câble (21) pouvant être entraîné au moyen d'un élément de déplacement linéaire (27).

7. Appareil selon la revendication 6, caractérisé en ce que l'élément de déplacement linéaire (27) est un vérin entraîné de manière pneumatique.

8. Appareil selon l'une des revendications 3 à 5, caractérisé en ce que l'arbre horizontal (6) peut être couplé au moyen d'un couplage à un moteur électrique pour entraîner le basculement du récipient.

9. Appareil selon l'une des revendications précédentes, caractérisé en ce que les éléments d'alimentation sont constitués par des vis de dosage (11) à vitesse réglable.

10. Appareil selon l'une des revendications précédentes, caractérisé en ce que le récipient (10) est placé à l'intérieur d'un carter (2).

11. Appareil (1) selon l'une des revendications précédentes, caractérisé en ce qu'il fait partie d'un dispositif d'alimentation du bétail.

12. Appareil selon l'une des revendications précédentes, caractérisé en ce que l'élément de commande (19) est constitué par un ordinateur numérique programmé.

FIG. 1

FIG. 2